# EUROPEAN PATENT APPLICATION

(11) **EP 3 604 640 A1**
(43) Date of publication of application: **05.02.2020**
(21) Application number: 18776003.8
(22) Date of filing: 27.03.2018
(51) Int. Cl.: D01F 9/08, C01G 23/04

(54) **METHOD FOR PRODUCING METAL TITANATE FIBERS**

(30) Priority: 30.03.2017 JP 2017066723
(71) Applicant: JNC Corporation, Chiyoda-ku Tokyo 100-8105 (JP); JNC Fibers Corporation, Tokyo 100-0004 (JP)
(72) Inventor: UMEBAYASHI You, Moriyama-shi Shiga 524-0001 (JP)
(74) Representative: Becker Kurig Straus
(86) International application number: PCT/JP2018/012317
(87) International publication number: WO 2018/181258

(57) **Abstract**

The present invention addresses the problem of providing a method for producing metal titanate fibers, which is capable of easily preparing a uniform spinning solution, and which is able to stably spin for a long period of time. A method for producing metal titanate fibers, which comprises (A) a step for preparing a spinning solution, (B) a step for forming precursor fibers by electrospinning the spinning solution, and (C) a step for firing the precursor fibers, and which is characterized in that the step (A) for preparing a spinning solution comprises (a1) a step for obtaining a first solution by mixing a metal salt and a first solvent, (a2) a step for obtaining a second solution by mixing a fiber-forming material, a second solvent and a titanium alkoxide, and (a3) a step for obtaining a spinning solution by mixing the first solution and the second solution.

## Description

### BACKGROUND OF THE INVENTION

### Technical Field

The present invention relates to a method for producing metal titanate fibers.

### Related Art

Perovskite type metal oxide such as barium titanate or the like is applied to a sensor, an actuator or the like because of a high piezoelectric property or ferroelectric property. The perovskite type metal oxide is hard and brittle, and thus a composite in which a perovskite type metal oxide filler is filled in a resin is used to give flexibility or formability. Particularly, the fibrous perovskite type metal oxide filler with a great aspect ratio is expected to be capable of improving the piezoelectric property or the like because spontaneous polarization of the perovskite type metal oxide is oriented in the resin.

As one of methods for obtaining the fibrous perovskite type metal oxide with a great aspect ratio, an electro-spinning method is known. In non-patent literature 1, a method is recited in which tetra-isopropyl titanate is stirred and slowly mixed into a solution obtained by mixing barium acetate and acetic acid, then a solution consisting of polyvinyl-pyrrolidone and ethanol is mixed to prepare a spinning solution, and the barium titanate fibers are produced by electro-spinning the spinning solution and calcinating the resultant precursor fibers. However, in this production method, in order to obtain a uniform spinning solution, there is a problem concerning equipment such as operation is to be performed in a glove box so that moisture of the air does not mix into the uniform spinning solution, or there is a problem that an operation at the time of mixing the titanium alkoxide is complicated, and an easier method is required. In addition, the spinning solution prepared in this way is gelled and becomes turbid over time, and it is hard to stably spin for a long period.

In addition, in patent literature 1, metal oxide fibers consisting of titanium-containing ceramics and having an average fiber diameter of 50-1500 nm are proposed. In this patent literature 1, as a method for producing the barium titanate fibers, a method is recited in which a solution obtained by mixing ion-exchanged water, barium acetate, and polyethylene glycol is stirred and added into a solution obtained by mixing titanium tetra-normal butoxide and acetic acid, and thereby a spinning solution is prepared. However, in this method, problems arise that gelation occurs in the course of obtaining the spinning solution, and it is hard to achieve preparation of a uniform solution and long-period spinning stability.

### [Literature of related art]

### [Patent literature]

Patent literature 1: Japanese Laid-Open No. 2007-321277

### [Non-patent literature]

Non-patent literature 1: Materials Letters 59 (2005) 3645-3647

### SUMMARY

### [Problems to be Solved]

The present invention aims to solve the problems described above and provide a method for producing metal titanate fibers which is capable of easily preparing a uniform spinning solution and capable of stably spinning for a long period.

### [Means to Solve Problems]

The inventors have intensively studied to solve the above problems. As a result, it is found that by carrying out preparation processes of a spinning solution in a predefined order, a uniform spinning solution can be easily prepared and the metal titanate fibers can be stably produced for a long period, hence accomplishing the present invention.

The present invention has the following configuration.
[1] A method for producing metal titanate fibers, including:
   (A) a process for preparing a spinning solution;
   (B) a process for manufacturing precursor fibers by electro-spinning the spinning solution; and
   (C) a process for calcinating the precursor fibers; wherein
   (A) the process for preparing a spinning solution includes:
      (a1) a process for obtaining a first solution by mixing a metal salt and a first solvent;
      (a2) a process for obtaining a second solution by mixing a fiber-forming material, a second solvent and a titanium alkoxide; and
      (a3) a process for obtaining a spinning solution by mixing the first solution and the second solution.
[2] The method for producing metal titanate fibers according to the aforementioned [1], wherein the second solvent is a solvent in which a main component is alcohol.
[3] The method for producing metal titanate fibers according to the aforementioned [2], wherein the alcohol is propylene glycol monomethyl ether.
[4] The method for producing metal titanate fibers according to any one of the aforementioned [1]-[3], wherein a proportion of water in the first solvent is 15 weight% or less.
[5] The method for producing metal titanate fibers according to any one of the aforementioned [1]-[4], wherein a calcinating temperature in (C) the process for calcinating the precursor fibers is 600°C or higher.
[6] The method for producing metal titanate fibers according to any one of the aforementioned [1]-[5], further including (D) a process for grinding the metal titanate fibers.

### [Effect]

According to the present invention, a uniform spinning solution can be easily prepared, and the metal titanate fibers can be stably produced for a long period.

### BRIEF DESCRIPTION OF THE DRAWINGS

FIG. 1 is a scanning electron micrograph of barium titanate fibers of an example of the present invention.
FIG. 2 is a scanning electron micrograph of barium titanate fibers of an example of the present invention.
FIG. 3 shows X-ray diffraction images of the barium titanate fibers of examples of the present invention.
FIG. 4 is a scanning electron micrograph of barium titanate fibers of an example of the present invention.
FIG. 5 is a scanning electron micrograph of strontium titanate fibers of an example of the present invention.
FIG. 6 is an X-ray diffraction image of strontium titanate fibers of an example of the present invention.
FIG. 7 is a scanning electron micrograph of calcium titanate fibers of an example of the present invention.
FIG. 8 is an X-ray diffraction image of calcium titanate fibers of an example of the present invention.

### DESCRIPTION OF THE EMBODIMENTS

The present invention is specifically described below according to embodiments of the invention.

### <A. preparation process of spinning solution>

(A) a preparation process of a spinning solution in a method for producing metal titanate fibers of the present invention includes the following processes (a1)-(a3).

### <(a1) process for obtaining first solution>

In (A) the preparation process of a spinning solution, first, (a1) a process for obtaining a first solution by mixing a metal salt and a first solvent is performed. The first solution obtained by mixing the metal salt and the first solvent is a solution containing a metal element which may form a salt with titanic acid.

### <Metal salt>

The metal salt used in the production method of the present invention is not limited as long as it is a compound that forms a metal salt with titanic acid and obtains a fibrous structure. For example, the metal salt may be an alkaline earth metal salt such as a barium salt, a strontium salt, a calcium salt or the like, an alkaline metal salt such as a potassium salt, a sodium salt, lithium salt, a lead salt or the like, a cadmium salt, a bismuth salt, or the like, in particular, the barium salt, the strontium salt, and the calcium salt are preferably used to produce metal titanate (metatitanic acid) fibers.

The barium salt is not particularly limited and may be barium carbonate, barium acetate, barium hydroxide, barium oxalate, barium nitrate, barium chloride, a mixture of these, or the like. From the viewpoint of solubility in a solvent, barium carbonate, barium acetate, and barium nitrate are preferable.

The strontium salt is not particularly limited and may be strontium carbonate, strontium acetate, strontium nitrate, strontium chloride, or the like. The calcium salt may be calcium chloride, calcium carbonate, calcium acetate, calcium sulphate, or the like. The potassium salt may be potassium chloride, potassium chlorate, potassium chromate, potassium nitrate, potassium iodide, potassium sulphate, or the like. The sodium salt may be sodium sulfite, sodium chloride, sodium perchlorate, sodium nitrate, sodium bicarbonate, sodium carbonate, sodium sulfate or the like. The lithium salt may be lithium acetate, lithium carbonate, lithium chloride or the like.

### <First solvent>

The first solvent is not particularly limited as long as it is a solvent which can dissolve the metal salt; and from the viewpoint of solubility of the metal salt and uniformity of the finally obtained spinning solution, first solvent preferably has an organic acid as a main component, and more preferably has acetic acid as the main component. Furthermore, in this application, the "main component" means a component occupying the largest proportion of the components configuring the solvent, and means that the main component occupies 50 weight% or more, preferably 85 weight% or more of the entire solvent.

That is, a proportion of the organic acid in the first solvent is preferably 50 weight% or more. The organic acid may be a carboxylic acid and a sulfonic acid, and is preferably a carboxylic acid. The carboxylic acid may be an aliphatic carboxylic acid such as formic acid, acetic acid, and propionic acid, or the like, in particular, acetic acid is preferable.

In addition, the first solvent may contain solvents other than the organic acid; for example, the first solvent may contain water, methanol, ethanol, propanol, acetone, N, N-dimethylformamide, N, N-dimethylacetamide, dimethyl sulfoxide, N-methyl-2-pyrrolidone, toluene, xylene, pyridine, tetrahydrofuran, dichloromethane, chloroform, 1, 1, 1, 3, 3, 3-hexafluoroisopropyl and the like. Furthermore, corresponding to the solubility and the like of the metal salt, it is also preferable that the organic acid is not contained, and when the first solvent does not contain the organic acid, it is also preferable that the first solvent contains alcohol as the main component. The alcohol may be methanol, ethanol, propanol or the like.

In addition, the first solvent preferably has a low water content, and when water is contained, a proportion of the water in the first solvent is preferably 15 weight% or less and more preferably 5 weight% or less. When the metal salt is water soluble, if water is contained in the first solution, the solubility and the stability of the first solution are also improved, and if the water content in the first solution is 15 weight% or less, there is no risk that the stability of the spinning solution is lowered and it becomes hard to carry out the spinning.

Mixing conditions in the (a1) process are not particularly limited as long as no precipitates are generated; for example, the (a1) process can be carried out at 10-90°C for 1-24 hours. A mixing method is not particularly limited as long as the metal salt can be dissolved, and the mixing can be carried out using known equipment such as a magnetic stirrer, a shaker, a planetary stirrer, an ultrasonic device or the like. Concentration of the metal salt in the first solution is not limited as long as the metal salt is stably dissolved in the solution; for example, the concentration of the metal salt may be 0.1-10 mol/L, more preferably 0.2-5 mol/L. The concentration of the metal salt is preferably 0.1 mol/L or more because the metal titanate is formed into a fibrous shape easily, and the concentration of the metal salt is preferably 10 mol/L or less because the stability of the spinning solution is improved and thin fibers are obtained easily.

### <(a2) process for obtaining second solution>

In the solution preparation process in the method for producing metal titanate fibers of the present invention, independently from (a1), a process for obtaining a second solution by mixing a fiber-forming material, a second solvent, and a titanium alkoxide is performed. Although not bound by any particular theory, in the present invention, it is considered that by mixing the titanium alkoxide, the fiber-forming material, and the second solvent not containing water in advance, complex of the titanium alkoxide and the second solvent is easily stabilized, and thus hydrolysis and dehydration condensation of the titanium alkoxide are suppressed, and a stable spinning solution is obtained.

### <Fiber-forming material>

The fiber-forming material used in the present invention is not particularly limited as long as it can apply spinnability to the spinning solution, and may be, for example, polyvinyl alcohol, polyethylene glycol, polyethylene oxide, polyvinyl pyrrolidone, polyethylene, polypropylene, polyethylene terephthalate, polylactic acid, polyamide, polyurethane, polystyrene, polyvinylidene fluoride, polyacrylonitrile, polymethyl methacrylate, polyglycolic acid, polycaprolactone, cellulose, a cellulose derivative, chitin, chitosan, collagen, copolymers and mixtures thereof, or the like. From the viewpoint of solubility in the second solvent and a decomposition property in a calcinating process, the fiber-forming materials are preferably polyvinyl alcohol, polyethylene glycol, polyethylene oxide, polyvinyl pyrrolidone, and polyacrylic acid, and more preferably polyvinyl pyrrolidone.

A weight-average molecular weight of the fiber-forming material is not particularly limited, preferably in a range of 10,000-10,000,000, more preferably in a range of 50,000-5,000,000, and further preferably 100,000-1,000,000. The weight-average molecular weight is preferably 10,000 or higher because a fiber-forming property of the metal titanate fibers is excellent, and the weight-average molecular weight is preferably 10,000,000 or lower because the solubility is excellent and the preparation process is simplified.

### <Second solvent>

The second solvent used in the present invention is not particularly limited as long as it is a solvent which can dissolve the fiber-forming material and the stability of the spinning solution is obtained therefrom; however, from the viewpoint of formability of the complex with the titanium alkoxide, the second solvent preferably uses an alcohol solvent as a main component. The second solvent is preferably a solvent using, for example, ethanol, ethylene glycol, ethylene glycol monomethyl ether, propylene glycol monomethyl ether as the main component, and more preferably, propylene glycol monomethyl ether is used as the main component. Furthermore, the same as described above, the "main component" means a component occupying the largest proportion of the components configuring the second solvent, and means that the main component preferably occupies 50 weight% or more, more preferably 85 weight% or more of the components.

In addition, the second solvent may contain solvents other than the alcohol solvent; for example, the second solvent may contain acetone, N, N-dimethylformamide, N, N-dimethylacetamide, dimethyl sulfoxide, N-methyl-2-pyrrolidone, toluene, xylene, pyridine, tetrahydrofuran, dichloromethane, chloroform, formic acid, acetic acid, trifluoroacetic acid or the like.

### <Titanium alkoxide>

The titanium alkoxide used in the production of the present invention is not particularly limited and may be titanium tetra-methoxide, titanium tetra-ethoxide, titanium tetra-normal propoxide, titanium tetra-isopropoxide, titanium tetra-normal butoxide or the like. Titanium tetra-isopropoxide and the titanium tetra-normal butoxide are preferable because of the stability of the spinning solution and availability.

Mixing conditions or methods in the (a2) process are not particularly limited as long as effects of the present invention are obtained; for example, the (a2) process can be carried out at 10-90°C for 1-24 hours. The mixing method can be carried out using known equipment such as a magnetic stirrer, a shaker, a planetary stirrer, an ultrasonic device or the like. A mixing order in the second solution is not particularly limited; from the viewpoint of suppressing the hydrolysis and the dehydration condensation of the titanium alkoxide, the method in which the titanium alkoxide is mixed after the fiber-forming material is dissolved in the second solvent is preferable. Concentration of the fiber-forming material and the titanium alkoxide in the second solution is not limited as long as the titanium alkoxide exists stably in the solution along with the fiber-forming material; for example, the concentration of the fiber-forming material with respect to the second solvent may be 1-20 weight% and more preferably 3-15 weight%. The concentration of the fiber-forming material is preferably 1 weight% or more because the stability of the second solution is improved and the metal titanate is easily formed into a fibrous shape, and the concentration of the fiber-forming material is preferably 20 weight% or less because viscosity of the spinning solution does not become too high, stable spinning can be carried out, and thin fibers are easily obtained. The concentration of the titanium alkoxide with respect to the second solvent may be 0.1-10 mol/L, more preferably 0.2-5 mol/L. The concentration of the titanium alkoxide is preferably 0.1 mol/L or more because the metal titanate is formed into a fibrous shape easily, and the concentration of the titanium alkoxide is preferably 10 mol/L or less because the stability of the spinning solution is improved and thin fibers are obtained easily.

### <(a3) process for obtaining spinning solution>

In the solution preparation process in the method for producing metal titanate fibers of the present invention, a process for obtaining the spinning solution by mixing the first solution and the second solution is performed.

A method for mixing the first solution and the second solution in the present invention is not limited. Particularly, there is no need to carry out complicated operations such as mixing in small amounts while stirring. The mixing method may be a method such as stirring, ultrasonic treatment or the like. A mixing order is not particularly limited, the first solution may be added into the second solution, the second solution may be added into the first solution, or the first solution and the second solution may be added simultaneously to another container.

A proportion of mixing the first solution and the second solution is not particularly limited as long as a molar ratio of the metal salt and the titanium alkoxide can be adjusted in view of the target metal titanate fibers. If a weight ratio of the first solution and the second solution is preferably set to a range of 1:3-3:1 and more preferably set to a range of 1:2-2:1, the concentration of the metal salt or the titanium alkoxide does not become too high, a stable mixing operation is possible, and metal titanate fibers having a wide range of compositions can be obtained. Here, "a molar ratio of the metal salt and the titanium alkoxide is adjusted in view of the target metal titanate fibers" means that when barium titanate (BaTiO₃) fibers are required, the molar ratio of the barium salt and the titanium alkoxide may be 1:1, and when lithium titanate (Li₄Ti₅O₁₂) fibers are required, the molar ratio of the lithium salt and the titanium alkoxide may be 4:5.

### <Spinning solution>

The spinning solution in the method for producing metal titanate fibers in the present invention may contain a surfactant for a purpose of improving the fiber-forming property. The surfactant can be used in a range in which the uniformity or the spinning stability of the spinning solution is not impaired; for example, the surfactant may be an ionic surfactant such as sodium dodecyl sulfate, a nonionic surfactant such as polyoxyethylene sorbitan monolaurate, or the like. Preferably, the surfactant does not contain metal ions or the like and completely disappears in the calcinating process so that metal titanate fibers with a high purity can be obtained. Concentration of the surfactant is appropriately set according to types of the solvents that are used, the fiber-forming material or the like and is not particularly limited. Preferably, the concentration of the surfactant is in a range of 1 weight% or less with respect to a weight of the spinning solution. The concentration of the surfactant is preferably 1 weight% or less because improvement of the effect matching the use is obtained.

The viscosity of the spinning solution in the method for producing metal titanate fibers of the present invention is preferably adjusted to a range of 5-10,000 cP, and more preferably in a range of 10-8,000 cP. If the viscosity is 5 cP or more, the spinnability for forming the fibers is obtained, and if the viscosity is 10,000 cP or less, the spinning solution is discharged easily. The viscosity is more preferably in the range of 10-8,000 cP because good spinnability is obtained in a wide range of spinning conditions. Viscosity of dispersion can be adjusted by appropriately changing the concentration of the metal salt or the titanium alkoxide, the molecular weight, the concentration or thickener of the fiber-forming material.

Components other than the above components may also be contained as the components of the spinning solution in a range in which the effect of the present invention is not significantly impaired. For example, a viscosity adjusting agent, a pH adjusting agent, a stabilizing agent, a preservative or the like may be contained.

### <(B) process for manufacturing precursor fibers>

In the method for producing metal titanate fibers of the present invention, the precursor fibers are obtained by electro-spinning the prepared spinning solution.

### <Electro-spinning>

An electro-spinning method is a method in which the spinning solution is discharged and an electric field is applied to fiberize the discharged spinning solution and obtain the fibers on a collector. The electro-spinning method may be, for example, a method in which the spinning solution is pushing out of a nozzle and an electric field is applied to spin, a method in which the spinning solution is bubbled and an electric field is applied to spin, a method in which the spinning solution is directed to a surface of a cylindrical electrode and an electric field is applied to spin, or the like. According to this method, uniform fibers having a diameter of 10 nm-10 µm can be obtained.

A method for discharging the spinning solution may be, for example, a method or the like in which a pump is used to discharge the spinning solution filled in a syringe from a nozzle. As for a temperature of the spinning solution, the spinning is possible at a room temperature, or the spinning solution may be heated or cooled to spin. An inner diameter of the nozzle is not particularly limited and is preferably in a range of 0.1-1.5 mm. In addition, a discharge amount is not particularly limited and is preferably 0.1-10 mL/hr. The discharge amount is preferably 0.1 mL/hr or more because sufficient productivity of the metal titanate fibers can be obtained, and the discharge amount is preferably 10 mL/hr or less because uniform and thin fibers can be obtained easily. A polarity of the applied voltage may be positive or negative. In addition, magnitude of the voltage is not particularly limited as long as the fibers are formed; for example, in a case of a positive voltage, a range of 5-100 kV can be exemplified. A method for applying an electric field is not particularly limited as long as the electric field can be formed at the nozzle and the collector. For example, a high voltage is applied to the nozzle and the collector is grounded, or a high voltage is applied to the collector and the nozzle is grounded, or a positive high voltage is applied to the nozzle and a negative high voltage is applied to the collector. In addition, a distance between the nozzle and the collector is not particularly limited as long as the fibers are formed, and the distance may be in a range of 5-50 cm. The collector is not particularly limited in its raw material or shape as long as the collector can collect the spun fibers. A conductive material such as metal or the like is appropriately used as the raw material of the collector. The shape of the collector is not particularly limited and may be, for example, a flat plate shape, a shaft shape, a conveyor shape or the like. If the collector is the flat plate shape, a fiber assembly can be collected in a sheet shape, and if the collector is the shaft shape, the fiber assembly can be collected in a tube shape. If the collector is the conveyor shape, the fiber assembly which is collected in the sheet shape can be produced continuously.

The fiber assembly may be collected in a collector arranged between the nozzle and the collector. The collector preferably has a volume resistivity value of 10¹⁰ Ω·cm or less, more preferably 10⁸ Ω·cm or less. In addition, the collector with a raw material having a volume resistivity value beyond 10¹⁰ Ω·cm can also be appropriately used by being combined with a device which eliminates electric charges, such as an ionizer or the like. In addition, if a collector of an arbitrary shape is used, the fiber assembly can be collected in accordance with the shape of the collector. Furthermore, a liquid can also be used as the collector.

### <(C) process for calcinating precursor fibers>

In the method for producing the metal titanate fibers of the present invention, the precursor fibers obtained by electro-spinning are calcinated.

### <Calcinating method>

By calcinating the precursor fibers, the fiber-forming material or the like contained in the precursor fibers are heated and decomposed, and the metal titanate fibers can be obtained. A common electric furnace can be used for calcinating. A calcinating atmosphere is not particularly limited, and the calcinating can be carried out in an air atmosphere or an inert gas atmosphere. If the precursor fibers are calcinated in the air atmosphere, it is preferable because residue such as the fiber-forming material or the like is reduced and the metal titanate fibers with high purity can be obtained. The calcinating method may be one-stage calcinating or multi-stage calcinating.

A calcinating temperature is not particularly limited, a range of 600-1500°C is more preferable, and a range of 800∼1300°C is further preferable. If the calcinating temperature is 600°C or higher, the calcination is sufficient, crystallization of the metal titanate proceeds, and components other than the metal titanate are hard to remain and the metal titanate fibers with high purity can be obtained. In addition, if the calcinating temperature is 1500°C or lower, it is preferable because the metal titanate fibers do not become coarse, and energy consumption can be suppressed low and production cost is reduced. If the calcinating temperature is in the range of 800-1300°C, the purity and crystallinity are sufficiently high, coarse fibers are few, and the production cost can be sufficiently reduced. Calcinating time is not particularly limited and may be, for example, 1-24 hours. A temperature increase rate is not particularly limited and can be changed suitably in a range of 5-200°C/min.

The precursor fibers obtained by electro-spinning are molded into an arbitrary shape and calcinated, and thereby the metal titanate fiber assemblies with various shapes can be obtained. For example, the metal titanate fiber assemblies with a sheet shape can be obtained by being molded into a two-dimensional sheet shape and calcinated, and the metal titanate fiber assemblies with a tube shape can be obtained by winding and collecting the precursor fibers around a shaft. In addition, metal titanate fiber assemblies with a cotton shape can also be obtained in a manner that the precursor fibers are collected in the liquid to be frozen and dried, then molded into the cotton shape and calcinated.

### <(D) grinding process>

In the method for producing metal titanate fibers of the present invention, the obtained metal titanate fibers may be further refined by a grinding treatment or the like. The grinding treatment is preferable because the metal titanate fibers are easily filled as a filler in a resin or the like by being ground. The method of the grinding treatment is not particularly limited and may be a ball mill, a bead mill, a jet mill, a high pressure homogenizer, a planetary mill, a rotary crusher, a hammer crusher, a cutter mill, a stone mill, a mortar or the like. The grinding may be dry grinding or wet grinding, and the grinding method, conditions or the like may be appropriately changed in view of the property to be obtained. In the present invention, fragments of the metal titanate fibers refined by a crushing treatment are also included in the fibers.

### <Metal titanate fibers>

The metal titanate fibers can be easily and stably produced using the method of the present invention. A fiber diameter of the metal titanate fibers obtained by calcinating may be selected appropriately in accordance with required properties or applications. For example, the fiber diameter is preferably in a range of 50-10000 nm, more preferably in a range of 100-1000 nm. The fiber diameter is preferably 50 nm or larger because the strength of each fiber is increased and handling or post-processing becomes easy, and the fiber diameter is preferably 10000 nm or smaller because a specific surface area is increased and dispersibility in the resin or the like is improved. The fiber diameter is preferably in the range of 100-1000 nm because sufficient strength or a processing property is obtained, and the piezoelectric property or the ferroelectric property can be sufficiently improved. A method of controlling the fiber diameter is not particularly limited and may be the types of the solvents, the concentration of the metal salt or the titanium alkoxide, the molecular weight or the concentration of the fiber-forming material, the viscosity of the spinning solution, the electro-spinning conditions, or the like. The fiber diameter can be controlled by appropriately changing these items.

In addition, a fiber length of the metal titanate fibers is not particularly limited and is preferably in a range of 0.5-1000 µm, preferably in a range of 1-100 µm, and more preferably in a range of 2-50 µm. The fiber length is preferably 0.5 µm or longer because the spontaneous polarization of the metal titanate is easily oriented and excellent piezoelectric property or ferroelectric property can be obtained, and the fiber length is preferably 1000 µm or shorter because the metal titanate fibers can be uniformly dispersed in the resin or the like. An aspect ratio of the metal titanate fibers is not particularly limited and is preferably in a range of 2-1000, more preferably in a range of 5-500, and further preferably in a range of 10-100. The aspect ratio is preferably 2 or more because the spontaneous polarization of the metal titanate is easily oriented and excellent piezoelectric property or ferroelectric property can be obtained, and the aspect ratio is preferably 1000 or less because the metal titanate fibers can be uniformly dispersed in the resin or the like. As a method for controlling the fiber length or the aspect ratio, the fiber length or the aspect ratio can be appropriately controlled according to the grinding method, the grinding conditions or the like of the metal titanate fibers.

A crystal structure of the metal titanate fibers is not particularly limited and may be orthorhombic, tetragonal or cubic. The crystal structure is preferably tetragonal from the viewpoint of improving the piezoelectric property or the ferroelectric property. In addition, a crystallite size is not particularly limited and is preferably 10 nm or larger. If the crystallite size is 10 nm or larger, excellent piezoelectric property or ferroelectric property can be obtained. A method of controlling the crystallite size is not particularly limited and may be the changing of the calcinating temperature, the calcinating time, and the temperature increase rate in the calcinating process or the like. The crystal structure or the crystallite size of the metal titanate fibers can be measured by an X-ray diffraction method.

A diameter of metal titanate particles configuring the metal titanate fibers is not particularly limited and is preferably in a range of 10-10000 nm, more preferably in a range of 30-5000 nm. The diameter of the metal titanate particles is preferably 10 nm or larger because the piezoelectric property or the ferroelectric property can be greatly improved, and the diameter of the metal titanate particles is preferably 10000 nm or small because the metal titanate fibers can be uniformly dispersed in the resin or the like. A method of controlling the diameter of the metal titanate particles is not particularly limited, and the diameter of the metal titanate particles can be controlled by appropriately changing the calcinating temperature, the temperature increase rate, the calcinating time or the like in the calcinating process.

### Examples

The present invention is further specifically described below using examples, and the examples below are only for illustrative purposes. The scope of the present invention is not limited to the examples.

Measurement methods or definitions of physical property values used in the examples are shown below.

### • Method for measuring fiber diameter of metal titanate fibers

A scanning electron microscope (SU-8000) made by Hitachi, Ltd. is used to observe the obtained metal titanate fibers at a magnification of 5000-30000, diameters of 50 fibers are measured using image analysis software, and an average value of the fiber diameters of the 50 fibers is set as an average fiber diameter.
Method for measuring an X-ray diffraction image of metal titanate fibers
An X-ray diffraction device (D8 DISCOVER) made by BRUKER is used to irradiate CuKα rays to the obtained metal titanate fibers and detect the CuKα rays reflected from the samples, thereby obtaining the diffraction image.

### [Example 1]

### <Preparation of spinning solution>

0.99 weight part of barium carbonate and 3 weight parts of acetic acid are mixed to obtain a uniform first solution. Next, 0.36 weight part of polyvinyl-pyrrolidone, 2.64 weight parts of ethanol, and 1.42 weight parts of titanium tetra-isopropoxide are mixed to obtain a uniform second solution. The second solution is mixed into the obtained first solution to obtain a spinning solution. The spinning solution becomes slightly turbid immediately after mixing, but a uniform solution can be obtained by stirring.

### <Manufacturing of fibers>

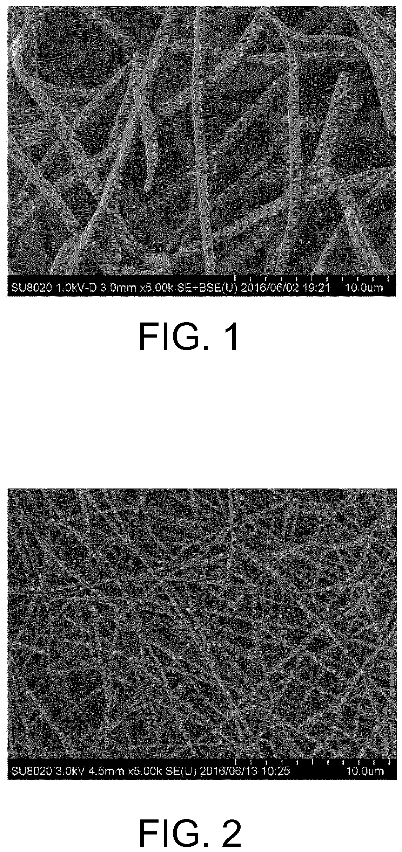

The spinning solution manufactured by the above method is supplied to a nozzle with an inner diameter of 0.22 mm by a syringe pump at a speed of 3.0 mL/hr, and a voltage of 18 kV is applied to the nozzle to collect precursor fibers (fiber assemblies) to a grounded collector. A distance between the nozzle and the collector is set to 20 cm. For about 3 hours, no white turbidity is seen in the spinning solution, and stable spinning is possible without nozzle clogging and the like. Precursor fibers which were electro-spun are heated to 800°C at a temperature increase rate of 10°C/min in air, kept for 1 hour, and then cooled to room temperature, thereby manufacturing barium titanate fibers having an average fiber diameter of 800 nm. A scanning electron micrograph of the obtained barium titanate fibers is shown in FIG. 1.

### [Example 2]

### <Preparation of spinning solution>

A spinning solution is prepared similarly to example 1 except that the acetic acid is set to 3.5 weight parts, the polyvinyl-pyrrolidone is set to 0.24 weight part, and the ethanol is set to 2.76 weight part. The spinning solution becomes slightly turbid immediately after mixing, but uniform solution can be obtained by stirring.

### <Manufacturing of fibers>

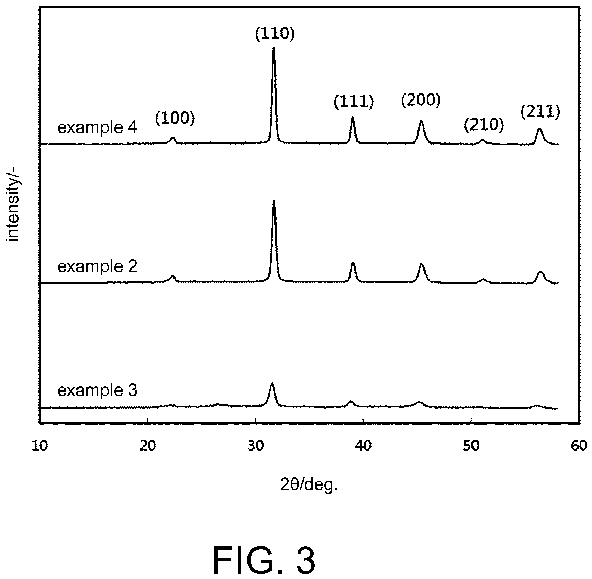

Barium titanate fibers having an average fiber diameter of 200 nm are manufactured in conditions similar to example 1 except that the spinning solution manufactured by the above method is supplied at a speed of 0.3 mL/hr. A scanning electron micrograph of the obtained barium titanate fibers is shown in FIG. 2. In addition, an X-ray diffraction image of the obtained barium titanate fibers is shown in FIG. 3.

### [Example 3]

Barium titanate fibers having an average fiber diameter of 200 nm are manufactured in conditions similar to example 2 except that the calcinating temperature is set to 600°C. An X-ray diffraction image of the obtained barium titanate fibers is shown in FIG. 3.

### [Example 4]

Barium titanate fibers having an average fiber diameter is 200 nm are manufactured in conditions similar to example 2 except that the calcinating temperature is set to 1150°C. An X-ray diffraction image of the obtained barium titanate fibers is shown in FIG. 3.

### [Example 5]

### <Preparation of spinning solution>

0.99 weight part of barium carbonate and 3 weight parts of acetic acid are mixed to obtain a uniform first solution. Next, 0.18 weight part of polyvinyl-pyrrolidone, 2.82 weight part of propylene glycol monomethyl ether, and 1.42 weight parts of titanium tetra-isopropoxide are mixed to obtain a uniform second solution. The second solution is mixed into the obtained first solution to prepare the spinning solution. The spinning solution is not gelled or does not become turbid at all, and a very uniform solution can be obtained.

### <Manufacturing of fibers>

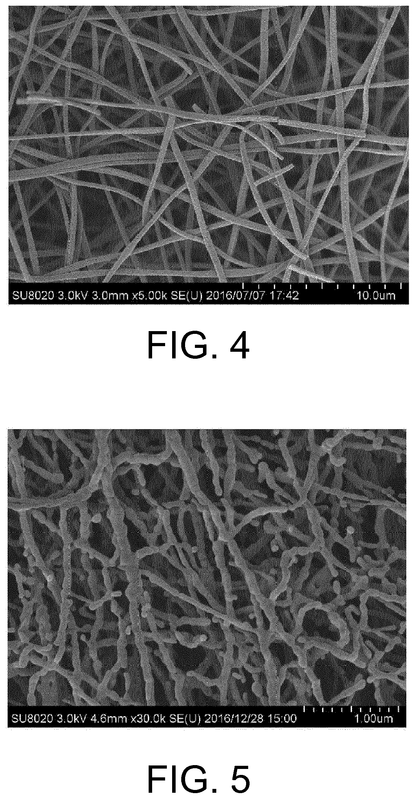

The spinning solution manufactured by the above method is supplied to a nozzle with an inner diameter of 0.22 mm by a syringe pump at a speed of 1.0 mL/hr, and a voltage of 23 kV is applied to the nozzle to collect precursor fibers (fiber assemblies) to a grounded collector. A distance between the nozzle and the collector is set to 17.5 cm. The spinning solution is in a uniform state with no white turbidity or thickening even after 120 hours. Stable spinning is possible for 12 hours or longer without nozzle clogging or the like using this solution. Precursor fibers which were electro-spun are heated to 800°C at a temperature increase rate of 10°C/min in air, kept for 1 hour, and then cooled to room temperature, thereby manufacturing barium titanate fibers having an average fiber diameter of 300 nm. A scanning electron micrograph of the obtained barium titanate fibers is shown in FIG. 4.

### [Comparison example 1]

1.28 weight parts of barium acetate and 3 weight parts of distilled water are mixed to obtain a uniform solution. Titanium tetra-isopropoxide is slowly dropped while stirring this solution, but the solution becomes white-turbid and loses fluidity immediately after a few drops. Therefore, electro-spinning cannot be performed.

### [Comparison example 2]

0.99 weight part of barium carbonate and 3 weight parts of acetic acid are mixed to obtain a uniform solution. 1.42 weight parts of titanium tetra-isopropoxide is slowly dropped while stirring this solution. Although fluidity of the solution still exists immediately after the mixing, the solution is partially gelled. After several hours, the solution becomes white-turbid and loses fluidity, and thus electro-spinning cannot be performed.

### [Comparison example 3]

### <Preparation of spinning solution>

0.83 weight part of titanium tetra-isopropoxide and 1.3 weight part of acetic acid are mix to obtain a uniform solution. A solution obtained by mixing 1.8 weight parts of distilled water, 0.75 weight part of barium acetate, and 0.044 weight part of polyethylene glycol while stirring the uniform solution is slowly dropped. Immediately after the mixing, the solution is partially gelled; however, the gel is divided by further continuing stirring, and a solution with fluidity can be prepared.

### <Manufacturing of fibers>

The spinning solution manufactured by the above method is supplied to a nozzle with an inner diameter of 0.22 mm by a syringe pump at a speed of 1.0 mL/hr, and a voltage of 15 kV is applied to the nozzle to collect precursor fibers (fiber assemblies) to a grounded collector. A distance between the nozzle and the collector is set to 15 cm. However, immediately after the electro-spinning is started, nozzle clogging is generated, and the spinning cannot be stably performed.

Production conditions and spinning results of examples 1-5 and comparison examples 1, 2 are summarized and shown in a table below.

### [Table 1]

**Table 1**

| | | Example 1 | Example 2 | Example 3 | Example 4 | Example 5 | Comparison example 1 | Comparison example 2 |
|---|---|---|---|---|---|---|---|---|
| Solution 1 | Barium carbonate (weight part) | 0.99 | 0.99 | 0.99 | 0.99 | 0.99 | | 0.99 |
| | Barium acetate (weight part) | | | | | | 1.28 | |
| | Acetic acid (weight part) | 3 | 3.5 | 3.5 | 3.5 | 3 | | 3 |
| | Water (weight part) | | | | | | 3 | |
| Solution 2 | Polyvinyl pyrrolidone (weight part) | 0.36 | 0.24 | 0.24 | 0.24 | 0.18 | | |
| | Ethanol (weight part) | 2.64 | 2.76 | 2.76 | 2.76 | | | |
| | Propylene glycol monomethyl ether (weight part) | | | | | 2.82 | | |
| | Titanium tetra-isopropoxide (weight part) | 1.42 | 1.42 | 1.42 | 1.42 | 1.42 | Become turbid immediately after dropping | 1.42 |
| Spinning process | Nozzle supply amount (mL/hr) | 3 | 0.3 | 0.3 | 0.3 | 1 | - | - |
| Calcinating process | Calcinating temperature (°C) | 800 | 800 | 600 | 1150 | 800 | - | - |
| Fiber diameter | Average fiber diameter (nm) | 800 | 200 | 200 | 200 | 300 | - | - |
| | Spinning result | Stable spinning is possible without white turbidity or nozzle clogging for about 3 hours | Stable spinning is possible without white turbidity or nozzle clogging for about 3 hours | Stable spinning is possible without white turbidity or nozzle clogging for about 3 hours | Stable spinning is possible without white turbidity or nozzle clogging for about 3 hours | Stable spinning is possible without white turbidity or nozzle clogging for 12 hours or longer | Become white-turbid and lose fluidity immediately after Ti(Oi-Pr)₄ drops. Spinning is impossible | Become white-turbid and lose fluidity after mixing for several hours. Spinning is impossible |

### [Example 6]

### <Preparation of spinning solution>

0.12 weight part of strontium carbonate, 3 weight parts of acetic acid, and 0.1 weight part of ion-exchanged water are mixed to obtain a uniform first solution. Next, 0.18 weight part of polyvinyl-pyrrolidone, 2.82 weight parts of propylene glycol monomethyl ether, and 0.23 weight part of titanium tetra-isopropoxide are mixed to obtain a uniform second solution. The second solution is mixed into the obtained first solution to prepare the spinning solution. The spinning solution is not gelled or does not become turbid at all, and a very uniform solution can be obtained.

### <Manufacturing of fibers>

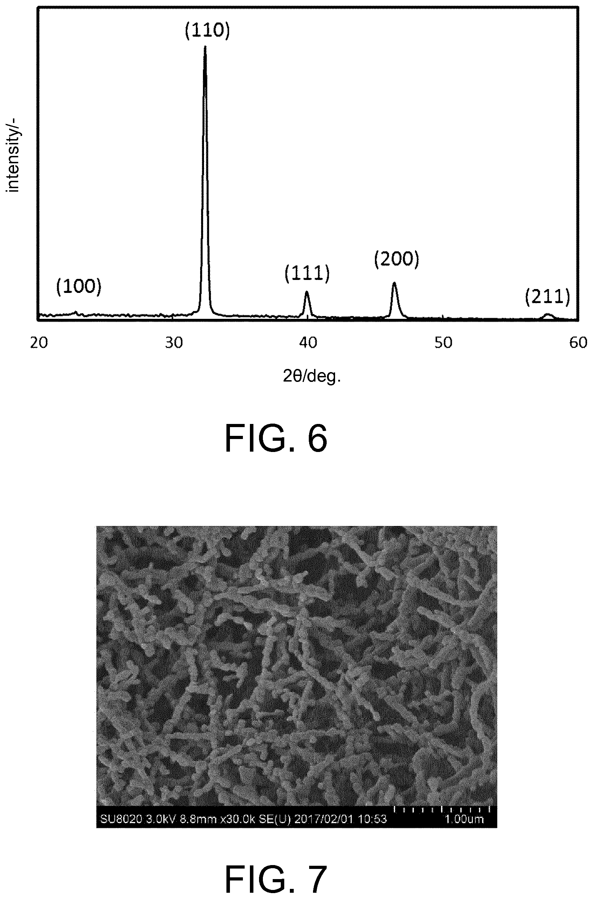

The spinning solution manufactured by the above method is supplied to a nozzle with an inner diameter of 0.22 mm by a syringe pump at a speed of 0.3 mL/hr, and a voltage of 15 kV is applied to the nozzle to collect precursor fibers (fiber assemblies) to a grounded collector. A distance between the nozzle and the collector is set to 15 cm. The spinning solution has no white turbidity even after 120 hours, and stable spinning is possible for 12 hours or longer without nozzle clogging or the like. Precursor fibers which were electro-spun are heated to 800°C at a temperature increase rate of 10°C/min in air, kept for 1 hour, and then cooled to room temperature, thereby manufacturing strontium titanate fibers having an average fiber diameter of 70 nm. A scanning electron micrograph of the obtained strontium titanate fibers is shown in FIG. 5. In addition, an X-ray diffraction image of the obtained strontium titanate fibers is shown in FIG. 6.

### [Example 7]

### <Preparation of spinning solution>

0.12 weight part of calcium chloride dihydrate and 3 weight part of ethanol are mixed to obtain a uniform first solution. Next, 0.18 weight part of polyvinyl pyrrolidone, 2.82 weight parts of propylene glycol monomethyl ether, and 0.23 weight part of titanium tetra-isopropoxide are mixed to obtain a uniform second solution. The second solution is mixed into the obtained first solution to prepare the spinning solution. The spinning solution is not gelled or does not become turbid at all, and a very uniform solution can be obtained.

### <Manufacturing of fibers>

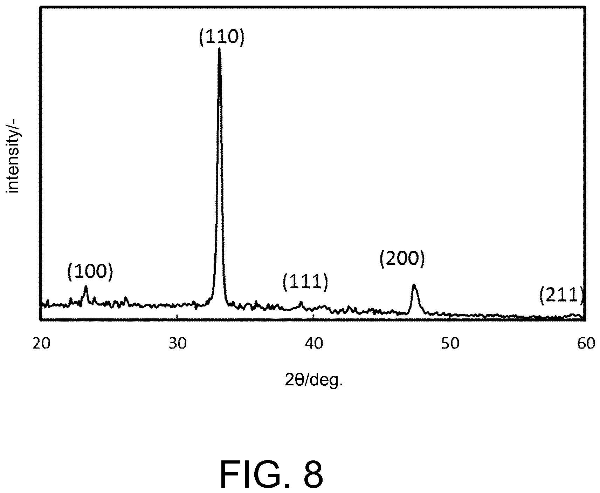

The spinning solution manufactured by the above method is supplied to a nozzle with an inner diameter of 0.22 mm by a syringe pump at a speed of 0.3 mL/hr, and a voltage of 15 kV is applied to the nozzle to collect precursor fibers (fiber assemblies) to a grounded collector. A distance between the nozzle and the collector is set to 15 cm. The spinning solution has no white turbidity even after 120 hours, and stable spinning is possible for 12 hours or longer without nozzle clogging. Precursor fibers which were electro-spun are heated to 800°C at a temperature increase rate of 10°C/min in air, kept for 1 hour, and then cooled to room temperature, thereby manufacturing calcium titanate fibers having an average fiber diameter of 70 nm. A scanning electron micrograph of the obtained calcium titanate fibers is shown in FIG. 7. In addition, an X-ray diffraction image of the obtained calcium titanate fibers is shown in FIG. 8.

### [Example 8] (Stability of spinning solution)

A spinning solution is obtained similarly to example 5 except that 0.1 weight part (a proportion of water in the first solution: 3.2 weight%) of ion-exchanged water is added into the first solution of example 5. The spinning solution is in a uniform state with no white turbidity or thickening even after 24 hours. After 120 hours, the spinning solution is in a slightly turbid state and thickening is observed.

### [Example 9] (Stability of spinning solution)

A spinning solution is obtained similarly to example 5 except that 0.2 weight part (a proportion of water in the first solution: 6.3 weight%) of ion-exchanged water is added into the first solution of example 5. The spinning solution is in a uniform state with no white turbidity or thickening even after 24 hours. After 120 hours, spinning solution is in a turbid state and fluidity is lost.

### (Stability of spinning solution)

### [Example 10]

A spinning solution is obtained similarly to example 5 except that 0.5 weight part (a proportion of water in the first solution: 14.3 weight%) of ion-exchanged water is added into the first solution of example 5. The spinning solution immediately after the mixing is partially gelled; however, the gel is divided by further continuing stirring, and a solution with fluidity can be prepared. The spinning solution is in a uniform state with no white turbidity or thickening after 3 hours. After 24 hours, the spinning solution is in a slightly turbid state and thickening is observed; after 120 hours, the spinning solution is in a turbid state and fluidity is lost.

### (Stability of spinning solution)

### [Example 11]

A spinning solution is obtained similarly to example 5 except that 1 weight part (a proportion of water in solution 1: 25.0 weight%) of ion-exchanged water is added into solution 1 of example 5. The spinning solution immediately after the mixing is partially gelled; however, the gel is divided by further continuing stirring, and a solution with fluidity can be prepared. After 3 hours, the spinning solution is in a slightly turbid state and thickening is observed; after 24 hours, the spinning solution is in a turbid state and fluidity is lost.

Evaluation results of the stability of the spinning solutions are summarized and shown in a table below.

### [Table 2]

**Table 2**

| | Solution 1 | | | | Solution 2 | | | State of spinning solution | | | | |
|---|---|---|---|---|---|---|---|---|---|---|---|---|
| | Barium carbonate (weight part) | Acetic acid (weight part) | Water (weight part) | Water concentration of solution 1 (weight%) | Polyvinyl pyrrolidone (weight part) | Propylene glycol monomethyl ether (weight part) | Titanium tetra-isopropoxide (weight part) | Immediately after mixing | After 5 minutes | After 3 hours | After 24 hours | After 120 hours |
| Example 5 | 0.99 | 3 | 0 | 0.0 | 0.18 | 2.82 | 1.42 | ○ | ○ | ○ | ○ | ○ |
| Example 8 | 0.99 | 3 | 0.1 | 3.2 | 0.18 | 2.82 | 1.42 | ○ | ○ | ○ | ○ | Δ |
| Example 9 | 0.99 | 3 | 0.2 | 6.3 | 0.18 | 2.82 | 1.42 | ○ | ○ | ○ | ○ | × |
| Example 10 | 0.99 | 3 | 0.5 | 14.3 | 0.18 | 2.82 | 1.42 | Gel generation | ○ (Gel decompos ition) | ○ | Δ | × |
| Example 11 | 0.99 | 3 | 1 | 25.0 | 0.18 | 2.82 | 1.42 | Gel generation | ○ (Gel decompos ition) | Δ | × | × |

### [Industrial Applicability]

According to the present invention, a uniform spinning solution can be easily prepared, and metal titanate fibers can be stably produced for a long period and can be appropriately used as piezoelectric materials, ferroelectric materials, or fillers of a dielectric filter or the like.

## Claims

1. A method for producing metal titanate fibers, **characterized in that** the method for producing metal titanate fibers comprising:
(A) a process for preparing a spinning solution;
(B) a process for manufacturing precursor fibers by electro-spinning the spinning solution; and
(C) a process for calcinating the precursor fibers; wherein
(A) the process for preparing the spinning solution comprises:
(a1) a process for obtaining a first solution by mixing a metal salt and a first solvent;
(a2) a process for obtaining a second solution by mixing a fiber-forming material, a second solvent and a titanium alkoxide; and
(a3) a process for obtaining a spinning solution by mixing the first solution and the second solution.

2. The method for producing metal titanate fibers according to claim 1, wherein the second solvent is a solvent using alcohol as a main component.

3. The method for producing metal titanate fibers according to claim 2, wherein the alcohol is propylene glycol monomethyl ether.

4. The method for producing metal titanate fibers according to any one of claims 1-3, wherein a proportion of water in the first solvent is 15 weight% or less.

5. The method for producing metal titanate fibers according to any one of claims 1-4, wherein a calcinating temperature in (C) the process for calcinating the precursor fibers is 600°C or higher.

6. The method for producing metal titanate fibers according to any one of claims 1-5, further comprising (D) a process for grinding the metal titanate fibers.
